# EUROPÄISCHE PATENTSCHRIFT

(11) **EP 2 186 696 B1**
(45) Veröffentlichungstag und Bekanntmachung des Hinweises auf die Patenterteilung: **18.07.2012**
(21) Anmeldenummer: 09013729.0
(22) Anmeldetag: 31.10.2009
(51) Int. Cl.: B60S 9/12

(54) **Pneumatischer Wagenheber**
Pneumatic car jack
Cric pneumatique

(30) Priorität: 13.11.2008 DE 202008015083 U; 21.11.2008 DE 202008015477 U
(43) Veröffentlichungstag der Anmeldung: 19.05.2010
(73) Patentinhaber: Krontec Maschinenbau GmbH, 93073 Neutraubling (DE)
(72) Erfinder: Tischler, Sam, 93053 Regensburg (DE); Jobst, Josef, 93057 Regensburg (DE)
(74) Vertreter: Graf Glück Habersack Kritzenberger

(56) Entgegenhaltungen:
- EP-A1- 0 222 735
- EP-A1- 1 715 192

## Beschreibung

Die Erfindung bezieht sich auf einen pneumatischen Wagenheber gemäß Oberbegriff Patentanspruch 1 und dabei insbesondere auf einen pneumatischen Wagenheber für den Rennsport.

Wagenheber dieser Art sind bekannt (EP 1 715 192 A1) und werden beispielsweise im Rennsport an Rennfahrzeugen montiert dazu verwendet, um ein schnelles Anheben des jeweiligen Fahrzeugs für Reparatur und/oder Wartung zu ermöglichen. Eine Besonderheit dieser Wagenheber besteht darin, dass nicht nur das Anheben des jeweiligen Fahrzeugs durch Ausfahren des Fußelementes pneumatisch erfolgt, sondern auch das Rückbewegen oder Einfahren des Fußelementes pneumatisch vorgenommen wird, und zwar durch die in einem Druckspeicher (Druckkammer) gespeicherte pneumatische Energie.

Aus der Druckschrift EP 0 222 735 A1 ist ferner ein einfach wirkender Arbeitszylinder bekannt. Dieser weist im Bereich des Kolbens ein Rückschlagventil auf, das einen Druckraum verschließt und das achsgleich zu einer Ventilöffnung angeordnet ist.

Nachteilig ist aber, dass derartige Wagenheber für das schnelle Ein- und Ausfahren des jeweiligen Fußelementes mit extrem hohen Druck betrieben werden und auch der Druckspeicher mit hohem pneumatischen Druck beaufschlagt ist, wodurch ein nicht unerhebliches Sicherheitsrisiko besteht.

Aufgabe der Erfindung ist es, einen pneumatischen Wagenheber aufzuzeigen, der diesen Nachteil vermeidet. Zur Lösung dieser Aufgabe ist ein pneumatischer Wagenheber entsprechend dem Patentanspruch 1 ausgebildet.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: in vereinfachter Darstellung und im Schnitt einen pneumatischen Wagenheber gemäß der Erfindung mit ausgefahrenem Fußelement;
- Fig. 2: eine Darstellung wie Figur 1, jedoch bei eingefahrenem Fußelement;

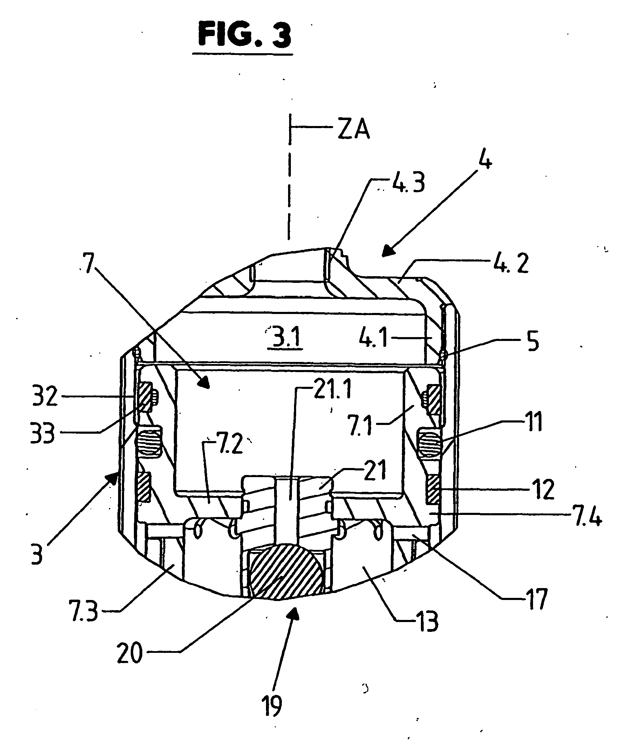

- Fig. 3: in vergrößerter Teildarstellung eine Einzelheit im Bereich eines Rückschlagventils einer als Druckspeicher dienenden Druckkammer für das pneumatische Zurückbewegen des Fußelementes in die Ausgangsstellung bzw. in den eingefahrenen Zustand.

Der in den Figuren allgemein mit 1 bezeichnete pneumatische Wagenheber besteht u.a. aus einem von einem Rohrstück 2 mit kreiszylinderförmiger Innen- und Außenfläche gebildeten Zylinder 3, dessen Zylinderraum 3.1 an einem Rohrstückende durch einen aufgeschraubten Zylinderdeckel 4 dicht verschlossen ist. Hierfür ist der napfartig ausgebildete Zylinderdeckel 4 mit einem an einem ringförmigen Deckelabschnitt 4.1 vorgesehenen Außengewinde in ein am Rohrstückende vorgesehenes Innengewinde eingeschraubt. Für die pneumatische Abdichtung ist ein die Zylinderachse ZA des Zylinders 3 konzentrisch umschließender Dichtungsring 5 zwischen der Außenfläche des Deckelabschnittes 4.1 und der Innenfläche des Rohrstückendes vorgesehen, und zwar derart, dass sich der Dichtungsring 5 von dem Zylinderraum 3.1 her gesehen vor der Schraubverbindung zwischen Zylinderdeckel 4 und Rohr 2 befindet und die Schraubverbindung somit auch bei druckbeaufschlagtem Zylinderraum 3.1 drucklos bzw. zumindest weitestgehend drucklos ist.

An seinem Boden 4.2 ist der Zylinderdeckel 4 mittig, d.h. achsgleich mit der Zylinderachse ZA mit einem Anschlussstutzen 4.3 ausgebildet, und zwar zum Anschließen des Wagenhebers 1 an eine Druckquelle zum Bereitstellen von Druckluft oder einem anderen gasförmigen Fluid mit hohem Druck, beispielsweise mit einem Druck zwischen etwa 12bar bis etwa 40bar. An dem den Zylinderdeckel 4 abgewandten Rohrstückende ist das Rohr 2 mit einem dieses Rohrende verstärkenden Zylinderring 6 versehen.

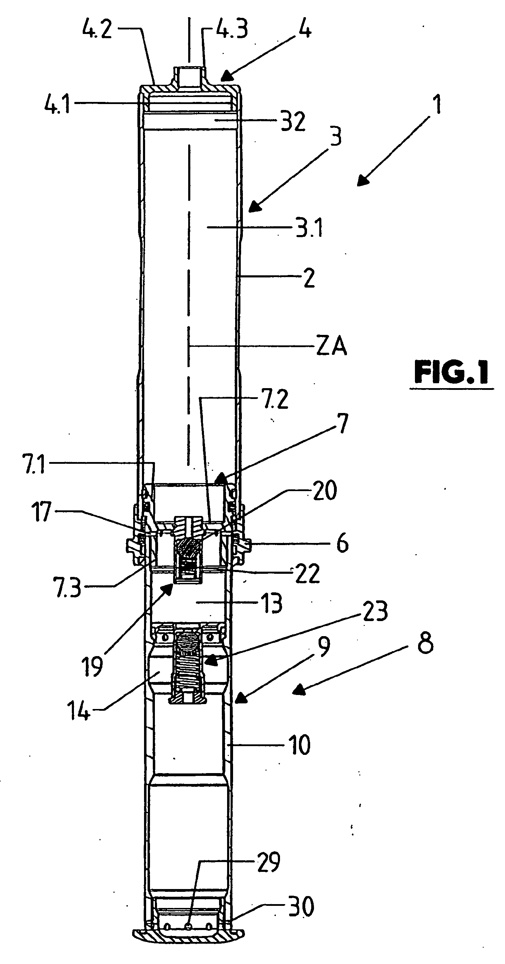

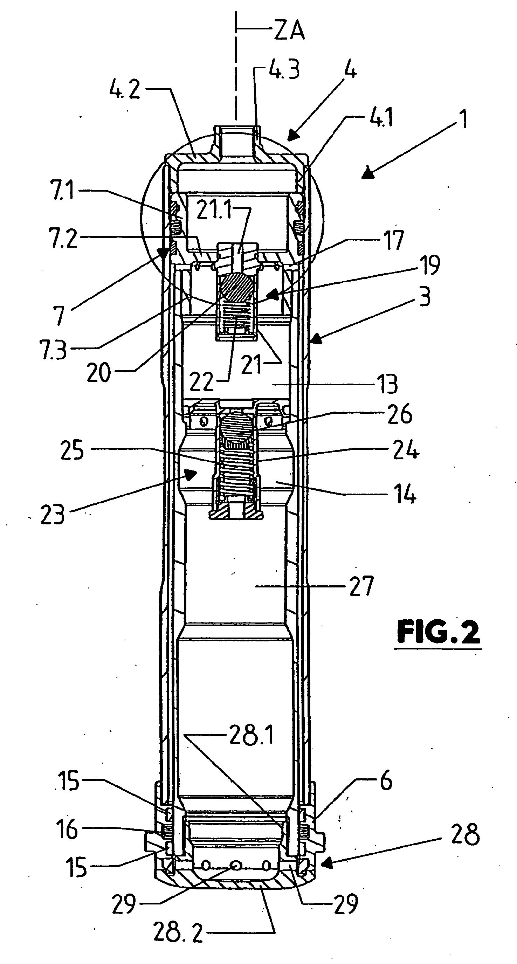

Im Zylinder 3 ist ein in den Figuren allgemein mit 7 bezeichneter Kolben axial verschiebbar vorgesehen, der Bestandteil eines Fußelementes 8 ist, welches in der Figur 1 in seinem ausgefahrenen Zustand und in der Figur 2 in seinem eingefahrenen Zustand dargestellte ist. Das Fußelement 8 besteht weiterhin aus einer achsgleich mit der Zylinderachse angeordneten Kolbenstange 9, die von einem Rohrstück 10 gebildet und an einem Ende mit dem Kolben 7 versehen ist.

Der Kolben 7 bildet einen ringförmigen Kolbenabschnitt 7.1, der auch bei vollständig ausgefahrenem Fußelement 8 noch im Zylinderraum 3.1 aufgenommen ist und liegt an seinem Umfang mit mehreren ringförmigen Gleit- und Dichtungselementen 11, 12 versehen abgedichtet gegen die Innenfläche des Zylinders 3 bzw. des Rohrstückes 2 an. Der Kolben 7 ist weiterhin einstückig mit einem Kolbenboden 7.2 ausgebildet, der senkrecht zur Zylinderachse ZA orientiert ist. An der dem Kolbenabschnitt 7.1 abgewandten Seite des Kolbenbodens 7.2 ist der Kolben 7 mit einem kreiszylinderförmigen Kolbenabschnitt 7.3 ausgebildet, der in das Rohrstück 10 hineinreicht und in geeigneter Weise dicht mit diesem Rohrstück verbunden ist. Im Inneren des Rohrstückes 10 ist an den Kolbenboden 7.2 anschließend als Energie- oder Druckspeicher eine Druckkammer 13 gebildet, die sich lediglich über eine Teillänge der Kolbenstange 9 bzw. des Fußelementes 8 erstreckt, beispielsweise über ein Drittel der axialen Länge der Kolbenstange 9, und die an der dem Kolben 7 abgewandte Seite durch ein Abschlusselement 14 (z.B. abdichtender Einsatz oder abdichtende Wandung) druckdicht verschlossen ist.

Das Rohrstück 10 besitzt an seiner kreiszylinderförmigen Außenfläche einen Durchmesser, der etwas kleiner ist als der Außendurchmesser, den der Kolben 7 an seinem ringförmigen Kolbenabschnitt 7.1 aufweist. Weiterhin ist der Zylinderring 6 im Bereich seiner Ringöffnung so geformt, dass diese Ringöffnung einen den Bewegungshub des Fußelementes 8 beim Ausfahren begrenzenden Anschlag für den Kolben 7 bildet, zugleich aber auch die Kolbenstange 9 bzw. das diese Kolbenstange bildende Rohrstück 10 in der Ringöffnung des Zylinderringes 6 unter Verwendung von ringförmigen Dichtungs- und Gleitelementen 15 und 16 abgedichtet geführt ist.

Über Öffnungen 17 in dem Kolbenabschnitt 7.3 steht die Druckkammer 13 ständig mit einem Ringraum 18 in Verbindung, der zwischen der Außenfläche des Rohrstückes 10 und der Innenfläche des Zylinderrings 6 bzw. des Rohrstückes 2 gebildet und der axial durch den Kolbenabschnitt 7.1 bzw. durch eine ringförmige Kolbenfläche 7.4, einerseits sowie durch die Abdicht- und Führungsringe 15 und 16 am Zylinderring 6, andererseits verschlossen ist.

Im Kolbenboden 7.3 ist mittig, d.h. achsgleich mit der Zylinderachse ZA ein Rückschlagventil 19 vorgesehen, im Wesentlichen bestehend aus einem als Kugel ausgebildeten Ventilkörper 20 in einem Ventilgehäuse 21 und aus einer Druckfeder 22, die den Ventilkörper 20 gegen einen im Ventilgehäuse 21 im Bereich einer Ventilöffnung 21.1 ausgebildeten Ventilsitz andrückt. Das Rückschlagventil 19 öffnet für eine Strömungs- oder Fluidverbindung aus dem Zylinderraum 3.1 in die Druckkammer 13 und schließt für eine für eine Strömungs- oder Fluidverbindung in umgekehrter Richtung.

An dem Abschlusselement 14 ist ebenfalls mittig, d.h. achsgleich mit der Zylinderachse ZA ein Sicherheitsventil in Form eines Überdruckventils 23 vorgesehen, welches vollständig und von außen her nicht zugänglich im Rohrstück 10 bzw. in der Kolbenstange 9 untergebracht ist und welches dann, wenn der Druck in der Druckkammer 13 einen vorgegebenen Druck-Schwellwert übersteigt, für eine Reduzierung des Druckes in der Druckkammer 13 öffnet. Das Überdruckventil 23 ist bei der dargestellten Ausführungsform als Kugelventil mit einem Ventilgehäuse 24 und einer durch eine Druckfeder 25 gegen einen Ventilsitz im Bereich einer Ventilöffnung angepressten Kugel gebildet. Selbstverständlich sind auch andere Ausführungen des Überdruckventils 23 möglich.

Das Überdruckventil 23 ist beispielsweise so eingestellt, dass es bei einem etwa 50bar bis 55bar übersteigenden Druck in der Druckkammer 13 öffnet, und zwar zu einem ebenfalls in der Kolbenstange 9 ausgebildeten Raum 27. Dieser Raum 27 ist durch die Wandung des Rohrstücks 10 und an dem dem Zylinder 3 entfernt liegenden Ende durch ein deckelartiges Fußstück 28 verschlossen. Dieses besteht im Wesentlichen aus einem die Zylinderachse ZA konzentrisch umschließenden ring- oder kreiszylinderförmigen Abschnitt 28.1, der in das dem Kolben 7 entfernt liegende Ende der Kolbenstange 9 eingesetzt und dort in geeigneter Weise befestigt ist, sowie aus einem einstückig mit dem Abschnitt 28.1 ausgebildeten Boden- oder Fußabschnitt 28.2, der mit seinem Randbereich über den Abschnitt 28.1 radial wegsteht und an seiner dem Abschnitt 28.1 abgewandten Außenfläche zumindest an dem Randbereich konvex gekrümmt ist.

Im Abschnitt 28.1 sind mehrere durchgehende Entlüftungsöffnungen 29 vorgesehen, denen Entlüftungsöffnungen 30 in der Wandung der Kolbenstange 9 bzw. des Rohrstückes 10 zugeordnet sind, und zwar derart, dass über die Entlüftungsöffnungen 29 und 30 eine Verbindung zwischen der Kammer 27 und der Umgebung besteht.

Der Wagenheber 1 ist zusammen mit weiteren Wagenhebern 1 an einem Fahrzeug, beispielsweise an einem Wettbewerbs- oder Rennfahrzeug derart montiert, dass die Zylinderachse ZA die vertikale oder im Wesentlichen vertikale Achse ist und im eingefahrenen Zustand des Wagenhebers 1 bzw. des Fußelementes 8 sich das Fußstück 28 in einem ausreichenden Abstand über dem Untergrund, beispielsweise einer Fahrbahn befindet. Der Wagenheber 1 weist dann den in der Figur 2 dargestellten Zustand auf, in welchem sich der Kolben 7 in unmittelbarer Nähe des Zylinderdeckels 4 befindet und dort durch Verrasten verriegelt ist. Dies wird bei der dargestellten Ausführungsform durch einen an der Außenfläche des Kolbenabschnittes 7.1 vorgesehenen, die Zylinderachse ZA konzentrisch umschließenden Federring 31 erreicht, der in eine an der Innenfläche des Zylinders 3 bzw. des Rohrstückes 2 gebildete Nut 32 verrastend eingreift.

Zum Anheben des Fahrzeugs wird der Zylinderraum 3.1 über den Anschluss 4.3 mit Druckluft beaufschlagt, und zwar mit einem hohen Arbeitsdruck unterhalb des Druck-Schwellwertes, z.B. mit einem Druck von etwas 12bars bis 40bar. Hierdurch wird einerseits durch den Druck, der auf die im Zylinderraum 3.1 liegende Fläche des Kolbens 7 einwirkt, der Kolben 7 in Richtung auf das mit dem Zylinderring 6 versehene Ende des Zylinders 3 bewegt und damit das Fußelement 8 ausgefahren, sodass es mit seinem Fußstück 28 gegen den Untergrund oder die Fahrbahn zur Anlage kommt und beim weiteren Ausfahren des Fußelementes 8 das Fahrzeug in der gewünschten Weise angehoben wird. Gleichzeitig gelangt über das Rückschlagventil 19 Druckluft auch in die Druckkammer 13, so dass auch diese und der Ringraum 18 auf den Arbeitsdruck aufgeladen werden. Da die den Ringraum 18 begrenzende Ringfläche 7.4 des Kolbens 7 ein Flächenmaß aufweist, welches sehr viel kleiner ist als das Flächenmaß der Fläche, die der Kolben 7 in dem Zylinderraum 3.1 bildet, wird das Ausfahren des Fußelementes 8 durch den Druck im Ringraum 18 nicht behindert. In der vollständig ausgefahrenen Stellung des Fußelementes 8 liegt der Kolben 7 mit einer Fläche gegen eine Gegenfläche am Ring 6 an, sodass eine definierte Endstellung erreicht ist.

Durch eine leicht konische Ausbildung der Außenfläche des Rohrstückes 10 in der Form, dass der Außendurchmesser zu dem mit dem Kolben 7 versehenen Ende des Rohrstückes 10 leicht zunimmt, ist die Kolbenstange 9 im vollständig ausgefahrenen Zustand des Fußelementes 8 leicht klemmend und damit spielfrei in dem Zylinderring 6 aufgenommen, womit eine verbesserte mechanische Stabilität des Wagenhebers 1 bei ausgefahrenem Fußelement 8 erreicht ist.

Zum Zurückbewegen des Fußelementes 8 in die Ausgangsstellung oder in die eingefahrene Stellung wird der Zylinderraum 3.1 entlüftet. Durch das Gewicht des sich absenkenden Fahrzeugs wird die Kolbenstange 9 dann zumindest soweit in den Zylinder 3 zurückgeschoben, dass die Klemmwirkung zwischen der Kolbenstange 9 und dem Zylinderring 6 aufgehoben ist. Gleichzeitig wirkt die in der Druckkammer 13 gespeicherte Druckluft über die Öffnungen 17 im Ringraum 18 auf die Ringfläche 7.4 des Kolbens 7 ein und bewegt dadurch den Kolben 7 und das gesamte Fußelement 8 in die Ausgangsstellung zurück, und zwar soweit, bis wiederum der radial federnde Rastring 31 in die Ringnut 32 verrastend eingreift.

Der Wagenheber 1 bzw. dessen Funktionselemente bestehen, soweit es sich nicht um Dichtungen handelt, beispielsweise aus metallischem Werkstoff und dabei bevorzugt aus Leichtmetall oder Leichtmetall-Legierungen.

Die Besonderheiten des Wagenhebers 1 sind insbesondere:
> Dadurch, dass der Dichtungsring 5 von dem Zylinderraum 3.1 her gesehen vor der Schraubverbindung zwischen dem Zylinderdeckel 4 und dem Rohrstück 2 angeordnet ist, ist diese Schraubverbindung freigehalten vom Druck im Zylinderraum 3.1. Hierdurch ist die Verbindung zwischen dem Zylinderdeckel 4 und dem Rohrstück 2 selbst bei relativ dünnwandiger Ausbildung des Rohrstückes 2 bzw. bei leichter Ausbildung des Wagenhebers 1 insgesamt mit einem extrem hohen Druck im Zylinderraum 3.1 belastbar, d.h. mit einem weit über dem Arbeitsdruck liegenden Druck, beispielsweise mit einem Druck bis zu 140bar.
> Dadurch, dass der Anschluss 4.3 und das Rückschlagventil 19 mit seiner Ventilöffnung 21.1 achsgleich oder im Wesentlichen achsgleich mit einander angeordnet sind, besteht die Möglichkeit, den Druckraum 13 manuell zu entlüften, beispielsweise für eine gefahrlose Lagerung und/oder einen gefahrlosen Transport des Wagenhebers 1. Hierfür wird mit einem durch den Anschluss 4.3 und die Ventilöffnung 21.1 eingeführten nadelartigen Werkzeug der Ventilkörper 20 gegen die Kraft der Feder 22 zurückgedrückt, sodass über das Rückschlagventil 19 er Druck aus der Druckkammer 13 entweichen kann.
> Durch das Überdruckventil 23 wird der Druck in der Druckkammer 13 auf einen maximal zulässigen Wert, beispielsweise auf einen Wert von etwa 50bar bis 55bar begrenzt. Dies ist ebenfalls ein entscheidendes Sicherheitsmerkmal, und zwar insbesondere auch dann, wenn ein Druckanstieg in der Druckkammer 13 z.B. durch Erwärmen zu befürchten ist.
> Da das Überdruckventil 23 vollständig in der Kolbenstange 9 aufgenommen und damit von außen her nicht zugänglich ist, ist auch jedwede Manipulation an dem Überdruckventil 23 ausgeschlossen.
> Die Entlüftungsöffnungen 29 und 30 befinden sich seitlich am Fußstück 28 bzw. am dortigen Ende der Kolbenstange 9 und sind gegenüber dem Untergrund durch den überstehenden Randbereich des pilzkopfartigen Abschnittes 28.2 geschützt. Ein eventuelles Entlüften bei ansprechendem Überdruckventil 23 erfolgt radial.
> Das Volumen des Druckraumes 13 ist bezogen auf das Gesamtvolumen der Kolbenstange 9 stark reduziert. In dem mit dem Arbeitsdruck beaufschlagte Druckraum 13 ist lediglich die für das Rückführen des Fußelementes 8 in die Ausgangsstellung notwendige Energie gespeichert, eine darüber hinausgehende Speicherung von Energie in der Druckkammer 13 ist nicht möglich, was insbesondere auch im Zusammenwirken mit dem Sicherheits- oder Überdruckventil 23 einen weiteren wesentlichen Sicherheitsaspekt des Wagenhebers 1 darstellt.
> In der Ausgangsstellung sind der Kolben 7 und damit die Fußelement 8 insgesamt mechanisch durch Verrasten zuverlässig gesichert.
> Im eingefahrenen Zustand des Fußelementes 8 befinden sich die Entlüftungsöffnungen 29 und 30 in einem innerhalb des Zylinderrings 6 gebildeten und durch das Fußstück 28 verschlossenen Raum und sind somit gegen Eindringen von Schmutz geschützt.

Die Erfindung wurde voranstehend an einem Ausführungsbeispiel erläutert. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste

- 1: Pneumatikzylinder bzw. Wagenheber
- 2: Rohrstück
- 3: Zylinder
- 3.1: Zylinderraum
- 4: Zylinderdeckel
- 4.1: ringförmiger Abschnitt des Zylinderdeckels 4
- 4.2: Bodenabschnitt des Zylinderdeckels 4
- 4.3: Anschluss
- 5: Dichtungsring
- 6: Zylinderring
- 7: Kolbenanordnung bzw. verschiebbares Fußelement
- 7.1: Kolbenabschnitt
- 7.2: Kolbenboden
- 7.3: Kolbenabschnitt
- 7.4: Ringfläche am Kolben 7
- 8: Fußelement
- 9: Kolbenstange
- 10: Rohrstück
- 11, 12: Dichtungs- und Führungselemente
- 13: Druckkammer
- 14: Absch lusselement
- 15, 16: Abdicht- und Führungselement
- 17: Öffnung
- 18: Ringraum
- 19: Rückschlagventil
- 20: Ventilkörper oder Kugel
- 21: Ventilgehäuse
- 21.1: Ventilöffnung
- 22: Ventilfeder
- 23: Sicherheits- oder Überdruckventil
- 24: Ventilgehäuse
- 25: Druckfeder
- 26: Kugel
- 27: Raum
- 28: deckelartiges Fußstück
- 28.1, 28.2: Abschnitt des Fußstücks 28
- 29, 30: Entlüftungsöffnungen
- 31: federnder Rastring
- 32: Ringnut

## Patentansprüche

1. Pneumatischer Wagenheber für Fahrzeuge, mit wenigstens einem Zylinder (3), mit einem Kolben (7), der in einem mit einem Pneumatikdruck beaufschlagbaren Zylinderraum (3.1) des Zylinders (3) axial verschiebbar ist und Bestandteil eines Fußelementes (8) ist, welches zusammen mit dem Kolben (7) zwischen einem eingezogenen und einem ausgefahrenen Zustand axial bewegbar ist, mit wenigstens einem in dem Fußelement (8) ausgebildeten Druckspeicher (13), der ebenfalls mit dem Pneumatikdruck beaufschlagbar ist und mit einem Zylinderhilfsraum (18) in Verbindung steht, wobei der Kolben (7) für eine pneumatisch betätigte Bewegung des Fußelementes (8) aus der eingezogene Position in die ausgefahrene Position mit einer ersten Kolbenfläche in dem Zylinderraum (3.1) und für eine pneumatische Rückbewegung aus dem ausgefahrenen Zustand in den eingezogenen Zustand mit einer zweiten gegenüber der ersten kleineren Kolbenfläche in dem Hilfszylinderraum angeordnet ist, **dadurch gekennzeichnet,**
**dass** der Druckspeicher (13) mit einem Sicherheits- und/oder Überdruckventil (23) versehen ist, und dass das Sicherheits- und/oder Überdruckventil (23) in einem zur Umgebung hin geschützten Innenraum (27) des Fußelementes (8) untergebracht ist.

2. Wagenheber nach Anspruch 1, **dadurch gekennzeichnet, dass** zwischen dem Zylinderraum (3.1) und dem Druckspeicher (13) am Kolben (7) wenigstens ein Rückschlagventil (19) vorgesehen ist, welches für eine Strömung aus dem Zylinderraum (3.1) in den Druckspeicher (13) öffnet und für eine Strömung in umgekehrter Richtung sperrt, dass das Rückschlagventil (19) hierfür einen Ventilkörper (20) aufweist, der in der Zylinderachse (ZA) oder im Wesentlichen in der Zylinderachse (ZA) gegen die Wirkung einer Ventilfeder (22) bewegbar mit dieser Feder (22) angepresst gegen einen Ventilsitz im Bereich einer Ventilöffnung (21.1) anliegt, und dass das Rückschlagventil (19) mit seiner Ventilöffnung (21.1) achsgleich oder im Wesentlichen achsgleich mit einer Öffnung oder einem Anschluss (4.3) des Zylinderraums (3.1) angeordnet ist.

3. Wagenheber nach einem der vorhergehenden Ansprüche, **dadurch gekennzeichnet, dass** das Rückschlagventil (19) am Kolben (7) vorgesehen ist.

4. Wagenheber nach einem der vorhergehenden Ansprüche, **dadurch gekennzeichnet, dass** die Druckkammer (13) axial durch den Kolben (7) sowie durch ein das Sicherheits- oder Überdruckventil (23) aufweisendes Abdichtelement (14) oder eine entsprechende Wandung begrenzt ist.

5. Wagenheber nach einem der vorhergehenden Ansprüche, **dadurch gekennzeichnet, dass** das Fußelement (8) aus dem Kolben (7) und einer mit diesem Kolben verbundenen und von einem Rohrstück (10) gebildeten Kolbenstange (9) besteht.

6. Wagenheber nach einem der vorhergehenden Ansprüche, **dadurch gekennzeichnet, dass** das Sicherheits- oder Überdruckventil (23) in einem Innenraum des Fußelementes aufgenommen ist, der lediglich über Entlüftungsöffnungen (29, 30) mit der Umgebung in Verbindung steht.

7. Wagenheber nach einem der vorhergehenden Ansprüche, **dadurch gekennzeichnet, dass** sich der Druckspeicher oder eine diesen bildende Druckkammer (13) nur über eine Teillänge des Fußelementes (8) erstrecken, beispielsweise über eine Teillänge, die etwa einem Drittel der axialen Länge des Fußelementes (7) entspricht.

8. Wagenheber nach einem der vorhergehenden Ansprüche, **dadurch gekennzeichnet, dass** ein die Kolbenstange (9) bildende Rohrstück (10) an seinem dem Kolben (7) abgewandten Ende durch ein deckelartiges Abschlussoder Fußstück (28) verschlossen ist.

9. Wagenheber nach Anspruch 8, **dadurch gekennzeichnet, dass** am Fußstück (28) und/oder im Bereich des Fußstückes (28) radial zur Zylinderachse (ZA) orientiere Entlüftungsöffnungen (29, 30) vorgesehen sind.

10. Wagenheber nach einem der vorhergehenden Ansprüche, **dadurch gekennzeichnet, dass** der Hilfszylinderraum als Ringraum (18) zwischen der Innenfläche des Zylinders (3) und einer Außenfläche des Fußelementes (8) oder der Kolbenstange (9) des Fußelementes (8) gebildet ist.

11. Wagenheber nach einem der vorhergehenden Ansprüche, **gekennzeichnet durch** Mittel zum mechanischen Verrasten des Fußelementes (8) in der eingefahrenen Stellung

12. Wagenheber nach Anspruch 11, **dadurch gekennzeichnet, dass** die Mittel zum mechanischen Verrasten von wenigstens einem radial federnden Rastring (31) am Fußelement (8) oder am Kolben (7) und von wenigstens einer Ringnut (32) an der Innenfläche des Zylinders (3) gebildet sind.

13. Wagenheber nach einem der vorhergehenden Ansprüche, **dadurch gekennzeichnet, dass** das Sicherheits- und/oder Überdruckventil (23) so ausgebildet und/oder eingestellt ist, dass es bei einem einen Arbeitsdruck, beispielsweise bei einem einen Arbeitsdruck im Bereich von etwa 12ba bis 40bar übersteigenden Druck, beispielsweise bei einem Druck im Bereich von etwa 50bar bis 55bar öffnet.

## Claims

1. Pneumatic lifting jack for vehicles, with at least one cylinder (3), with a piston (7) which is axially displaceable in a cylinder chamber (3.1) of the cylinder (3) which can be charged with pneumatic pressure and is a constituent part of a foot element (8) which is axially movable together with the piston (7) between a retracted position and an extended position, with at least one pressure reservoir (1) which is formed in the foot element (8) and which can likewise be charged with the pneumatic pressure and is in communication with a cylinder secondary chamber (18) wherein the piston (7) is mounted for a pneumatically actuated movement of the foot element (8) out from the retracted position into the extended position with a first piston face in the cylinder chamber (3.1) and for a pneumatic return movement from the extended position into the retracted position with a second piston face opposite the first smaller piston face in the secondary cylinder chamber, **characterised in that** the pressure reservoir (13) is provided with a safety and/or excess pressure valve (23) and that the safety and/or excess pressure valve (23) is housed in an interior chamber (27) of the foot element (8) protected from the surroundings.

2. Vehicle jack according to claim 1 **characterised in that** between the cylinder chamber (3.1) and the pressure reservoir (13) on the piston (7) there is at least one non-return valve (19) which opens for a flow from the cylinder chamber (3.1) into the pressure reservoir (13) and closes for a flow in the reverse direction, that the non-return valve (19) has for this purpose a valve body (20) which is movable in the cylinder axis (ZA) or substantially in the cylinder axis (ZA) against the action of a valve spring (22) and is pressed with this spring (22) against a valve seat in the region of a valve opening (21.1), and that the non-return valve (19) is mounted with its valve opening (21.1) axially identical or substantially axially identical with an opening or connector (4.3) of the cylinder chamber (3.1).

3. Vehicle jack according to one of the preceding claims **characterised in that** the non-return valve (19) is provided on the piston (7).

4. Vehicle jack according to one of the preceding claims **characterised in that** the pressure chamber (13) is defined axially by the piston (7) as well as by a sealing element (14) comprising the safety or excess pressure valve (23) or by a suitable wall.

5. Vehicle jack according to one of the preceding claims **characterised in that** the foot element (8) consists of the piston (7) and a piston rod (9) which is connected to this piston and is formed by a piece of pipe (10).

6. Vehicle jack according to one of the preceding claims **characterised in that** the safety or excess pressure valve (23) is housed in an interior chamber of the foot element which is in communication with the atmosphere only by way of ventilation openings (29, 30).

7. Vehicle jack according to one of the preceding claims **characterised in that** the pressure reservoir or a pressure chamber (13) forming same only extends over part of the length of the foot element (8), by way of example over a part corresponding to about a third of the axial length of the foot element (7).

8. Vehicle jack according to one of the preceding claims **characterised in that** a piece of pipe (10) forming the piston rod (9) is closed at its end remote from the piston (7) by a cover-like closure or foot member (28).

9. Vehicle jack according to claim 8 **characterised in that** on the foot member (28) and/or in the region of the foot member (28) there are ventilation openings (29, 30 which are aligned radially relative to the cylinder axis (ZA).

10. Vehicle jack according to one of the preceding claims **characterised in that** the secondary cylinder chamber is formed as an annular chamber (18) between the internal face of the cylinder (3) and an external face of the foot element (8) or the piston rod (9) of the foot element (8).

11. Vehicle jack according to one of the preceding claims **characterised by** means for mechanically locking the foot element (8) in the retracted position.

12. Vehicle jack according to claim 11 **characterised in that** the means for the mechanical locking are formed by at least one radially resilient detent ring (31) on the foot element (8) or on the piston (7) and by at least one annular groove (32) on the internal face of the cylinder (3).

13. Vehicle jack according to one of the preceding claims **characterised in that** the safety and/or excess pressure valve (23) is designed and/or set so that it opens in the event of pressure exceeding an operating pressure, by way of example in the event of pressure exceeding an operating pressure in the region of from about 12ba to 40bar, by way of example in the event of pressure in the region of about 50 bar to 55 bar.

## Revendications

1. Cric pneumatique pour véhicules, avec au moins un cylindre (3), avec un piston (7), qui peut coulisser axialement dans un espace (3.1) du cylindre (3) qui peut être alimenté par une pression pneumatique et qui fait partie d'un élément de pied (8), qui peut être déplacé axialement conjointement avec le piston (7) entre un état rentré et un état déployé, avec au moins un accumulateur de pression (13) formé dans l'élément de pied (8), qui peut être alimenté également par la pression pneumatique et est en communication avec un espace de cylindre auxiliaire (18), dans lequel le piston (7) est agencé avec une première surface de piston dans l'espace de cylindre (3.1) pour un déplacement commandé par voie pneumatique de l'élément de pied (8) de la position rentrée à la position déployée et avec une seconde surface de piston plus petite que la première surface de piston dans l'espace de cylindre auxiliaire pour un déplacement pneumatique inverse de l'état déployé à l'état rentré, **caractérisé en ce que**
l'accumulateur de pression (13) est pourvu d'une soupape de sécurité et/ou de surpression (23) et **en ce que** la soupape de sécurité et/ou de surpression (23) est logée dans un espace interne (27) de l'élément de pied (8) protégé de l'environnement.

2. Cric pour véhicules selon la revendication 1, **caractérisé en ce qu'**entre l'espace de cylindre (3.1) et l'accumulateur de pression (13) sur le piston (7), on prévoit au moins une soupape de non-retour (19) qui s'ouvre pour un écoulement de l'espace de cylindre (3.1) dans l'accumulateur de pression (13) et qui se bloque pour un écoulement dans le sens inverse de sorte que la soupape de non-retour (19) présente à cet égard un corps de soupape (20), qui est appliqué, de manière à se déplacer dans l'axe de cylindre (ZA) ou sensiblement dans l'axe de cylindre (ZA) à l'encontre de l'action d'un ressort de soupape (22) en étant pressé avec ce ressort (22) contre un siège de soupape, dans la zone d'une ouverture de soupape (21.1) et **en ce que** la soupape de non-retour (19) est agencée avec son ouverture de soupape (21.1) dans le même axe ou sensiblement dans le même axe qu'une ouverture ou un raccord (4.3) de l'espace de cylindre (3.1).

3. Cric pour véhicules selon l'une quelconque des revendications précédentes, **caractérisé en ce que** la soupape de non-retour (19) est prévue sur le piston (7).

4. Cric pour véhicules selon l'une quelconque des revendications précédentes, caractérisé e n ce que la chambre de pression (13) est délimitée axialement par le piston (7) et par un élément d'étanchéité (14) présentant la soupape de sécurité ou de surpression (23) ou une paroi correspondante.

5. Cric pour véhicules selon l'une quelconque des revendications précédentes, **caractérisé en ce que** l'élément de pied (8) est constitué du piston (7) et d'une tige de piston (9) raccordée à ce piston et formée par une pièce tubulaire (10).

6. Cric pour véhicules selon l'une quelconque des revendications précédentes, **caractérisé en ce que** la soupape de sécurité ou de surpression (23) est logée dans un espace interne de l'élément de pied, qui est en communication uniquement via des ouvertures d'aération (29, 30) avec l'environnement.

7. Cric pour véhicules selon l'une quelconque des revendications précédentes, **caractérisé en ce que** l'accumulateur de pression ou une chambre de pression (13) formant celui-ci ne s'étend que sur une longueur partielle de l'élément de pied (8), par exemple sur une longueur partielle qui correspond approximativement à un tiers de la longueur axiale de l'élément de pied (7).

8. Cric pour véhicules selon l'une quelconque des revendications précédentes, **caractérisé en ce qu'**une pièce tubulaire (10) formant la tige de piston (9) est fermée à son extrémité opposée au piston (7) par une pièce de fermeture ou de pied (28) en forme de couvercle.

9. Cric pour véhicules selon la revendication 8, **caractérisé en ce que** l'on prévoit des ouvertures d'aération (29, 30) orientées radialement par rapport à l'axe de cylindre (ZA) sur la pièce de pied (28) et/ou dans la zone de la pièce de pied (28).

10. Cric pour véhicules selon l'une quelconque des revendications précédentes, **caractérisé en ce que** l'espace de cylindre auxiliaire se présente sous la forme d'un espace annulaire (18) entre la surface interne du cylindre (3) et une surface externe de l'élément de pied (8) ou de la tige de piston (9) de l'élément de pied (8).

11. Cric pour véhicules selon l'une quelconque des revendicationsprécédentes,**caractérisé par** desmoyens d'enclenchement mécanique de l'élément de pied (8) dans la position rentrée.

12. Cric pour véhicules selon la revendication 11, **caractérisé en ce que** les moyens d'enclenchement mécanique sont formés par au moins un anneau à cran à effet ressort radial (31) sur l'élément de pied (8) ou sur le piston (7) et par au moins une rainure annulaire (32) sur la surface interne du cylindre (3).

13. Cric pour véhicules selon l'une quelconque des revendications précédentes, **caractérisé en ce que** la soupape de sécurité et/ou de surpression (23) est formée et/ou réglée de sorte qu'elle s'ouvre à une pression dépassant une pression de travail, par exemple à une pression de travail dans la plage d'environ 12 bars à 40 bars, par exemple à une pression dans la plage d'environ 50 bars à 55 bars.
